# EUROPÄISCHE PATENTSCHRIFT

(11) **EP 2 617 979 B1**
(45) Veröffentlichungstag und Bekanntmachung des Hinweises auf die Patenterteilung: **08.06.2016**
(21) Anmeldenummer: 13000192.8
(22) Anmeldetag: 15.01.2013
(51) Int. Cl.: F02K 3/06, F02C 7/047, F02C 7/20

(54) **Enteisungsvorrichtung eines Fluggasturbinentriebwerks**
De-icing device for gas turbine engine
Dispositif de dégivrage pour turbine à gaz

(30) Priorität: 18.01.2012 DE 102012000890
(43) Veröffentlichungstag der Anmeldung: 24.07.2013
(73) Patentinhaber: Rolls-Royce Deutschland Ltd & Co KG, 15827 Blankenfelde-Mahlow (DE)
(72) Erfinder: Todorovic, Predrag, 10437 Berlin (DE); Araujo, Gustavo, Pooler GA 31322 (US)
(74) Vertreter: Hoefer & Partner Patentanwälte mbB

(56) Entgegenhaltungen:
- WO-A1-94/18072
- DE-A1- 3 936 198
- US-A- 3 284 037
- US-A- 6 079 670
- US-A1- 2009 152 401
- US-A1- 2010 242 428

## Beschreibung

Die Erfindung bezieht sich auf eine Enteisungsvorrichtung eines Fluggasturbinentriebwerks gemäss Anspruch 1.

Im Einzelnen bezieht sich die Erfindung auf ein Enteisungsvorrichtung mit einem Befestigungselement, mittels dessen zwei Bauelemente so miteinander verbindbar sind, dass eine vorgegebene Relativbewegung zwischen den Bauelementen möglich ist. Als Beispiel hierfür ist die Verbindung zweier zueinander konzentrischer Bauelemente zu nennen, welche in radialer und in axialer Richtung zueinander eine geringfügige Relativbewegung ausführen können, beispielsweise um Wärmeausdehnungen auszugleichen.

Aus dem Stand der Technik ist es bekannt, Befestigungselemente vorzusehen, die entweder durch geeignete Werkstoffwahl (elastische Buchsen oder Ähnliches) oder durch konstruktive Maßnahmen (Langlöcher, Ausnehmungen größeren Durchmessers für Führungszapfen mit geringerem Durchmesser) die gewünschte Bewegbarkeit bei gleichzeitig definierter Lagerung schaffen.

Als nachteilig hierbei erweist es sich, dass die aus dem Stand der Technik bekannten Konstruktionen aufwendig in der Herstellung und in der Montage sind und aus vielen Einzelteilen bestehen. Durch den komplizierten Aufbau ergibt sich ein erheblicher Verschleiß, der zu Lockerungen oder Rattern führen kann und die Lebensdauer des Befestigungselementes insgesamt deutlich herabsetzt.

Im Einzelnen bezieht sich die Erfindung weiterhin auf eine Enteisungsvorrichtung, welche in einer Triebwerksverkleidung in deren Einströmbereich angeordnet ist.

Aus dem Stand der Technik ist es bekannt, innerhalb eines doppelwandig ausgebildeten Einströmbereichs einer Triebwerksverkleidung angrenzend an einen Anströmbereich oder eine Ringlippe ein kreisringförmiges Rohrelement anzubringen, in welches Heißluft eingeführt wird, welche durch Ausströmöffnungen des Rohrelements austritt und somit von der Innenseite die Wandung der Ringlippe beheizt (piccolo tube Enteisungs-Prinzip).

Ein derartiges ringförmiges Rohrelement weist konstruktionsbedingt einen sehr großen Durchmesser auf. Dies führt, zusammen mit den sich während des Betriebs einer Fluggasturbine stark ändernden Temperaturen, zu starken thermischen Ausdehnungen bzw. Kontraktionen, welche zu starken thermischen Spannungen führen. Diese thermischen Spannungen beeinträchtigen nicht nur das ringförmige Rohrelement selbst, sondern auch dessen Lagerung. Deshalb zeigt der Stand der Technik, beispielsweise die US 6,079,670, sehr aufwändige Maßnahmen, um das Rohrelement so zu lagern, dass die Lagerung selbst durch die thermischen Ausdehnungen bzw. Kontraktionen nicht beschädigt wird. All dies führt zu hohlen Herstellkosten sowie zu einem erheblichen Gewicht der Gesamtkonstruktion und bedingt Fehler durch Bauteilversagen, wie etwa Verschleiß, welche durch aufwändige Wartungs- und Überprüfungsmaßnahmen begleitet werden.

Weiterhin ist im Hinblick auf die aus dem Stand der Technik bekannten Lösungen darauf hinzuweisen, dass während des Betriebs eines Fluggasturbinentriebwerks im Bereich der Enteisungsvorrichtung sehr hohe Temperaturunterschiede vorliegen. Während des üblichen Reisefluges kühlt der Anströmbereich der Triebwerksverkleidung beispielsweise auf Temperaturen von -56°C oder kälter ab. Wird dann beispielsweise beim Landeanflug die Enteisung in Betrieb genommen, so strömt Heißluft mit Temperaturen zwischen 400°C und 500°C durch das Rohrelement. Handelsübliche Befestigungsgelenke, beispielsweise sphärische Gelenke können in derartigen Temperaturbereichen nur sehr eingeschränkt arbeiten oder erfordern einen sehr erheblichen konstruktiven Aufwand.

Eine ähnliche Lösung ist aus der US 2009/0152401 A1 vorbekannt. Dabei sind zur Lagerung des Rohrelements mehrere ringförmige Lagerböcke vorgesehen, die mit der Triebwerksverkleidung verschraubt sind. Es sind keine vorbestimmten elastischen Verformungen möglich, welche unterschiedliche thermische Ausdehnungen bewältigen könnten.

Aus der DE 39 36 198 A1 ist eine Aufhängevorrichtung für an Brücken zu befestigende Rohre offenbart. Dabei wird das Rohr von einer zweiteiligen Rohrschelle mit einem oberen Schellenteil und einem unteren Schellenteil geklemmt. Die Aufhängung der Rohrschelle bzw. des Rohres erfolgt über vertikale Gewindestangen. Eine zusätzliche Positionierung wird durch seitliche Absteifungsstreben erreicht. Auch bei dieser Konstruktion ergeben sich Relativbewegungen der Kontaktflächen.

Eine weitere Enteisungsvorrichtung zeigt die US 2010/0242428 A1. Das ringförmige Rohrelement wird dabei über Anschlussrohre gelagert, das Rohrelement selbst ist mit keinen Befestigungselementen in Kontakt.

Der Erfindung liegt die Aufgabe zugrunde, ein Befestigungselement der eingangs genannten Art zu schaffen, welches bei einfachem Aufbau und einfacher, kostengünstiger Herstellbarkeit die Nachteile des Standes der Technik vermeidet und eine präzise Lagerung der Bauteile aneinander sicherstellt.

Der Erfindung liegt weiterhin die Aufgabe zugrunde, eine Enteisungsvorrichtung der eingangs genannten Art zu schaffen, welche bei einfachem Aufbau und einfacher, kostengünstiger Herstellbarkeit die Nachteile des Standes der Technik vermeidet und mit einer einfachen Lagerung versehen werden kann.

Erfindungsgemäß wird die Aufgabe durch die Merkmalskombinationen der unabhängigen Ansprüche gelöst, die Unteransprüche zeigen weitere vorteilhafte Ausgestaltungen der Erfindung.

Das erfindungsgemäße Befestigungselement ist somit fachwerkartig ausgebildet und weist zwei in einem Winkel zueinander angeordnete Streben auf. Die voneinander beabstandeten ersten Endbereiche der Streben sind an einem der Bauelemente befestigt, während die anderen Endbereiche der Streben miteinander verbunden sind und das andere der beiden Bauteile lagern.

Erfindungsgemäß ergibt sich somit eine Ausgestaltung, welche mehrere Freiheitsgrade aufweist, so dass thermische Dimensiörisänderungen oder Vibrationen aufgefangen werden können, ohne dass das Befestigungselement selbst übermäßigen Belastungen ausgesetzt wäre, welche in der Folge zu einem Bruch oder Versagen des Befestigungselements führen könnten. Das erfindungsgemäße Befestigungselement ist somit in der Lage, wie nachfolgend noch beschrieben werden wird, mehrere Bewegungen aufzunehmen und durchzuführen, beispielsweise Bewegungen eines ringförmigen Rohrelements einer Enteisungsvorrichtung. Dabei treten bei dem Befestigungselement lediglich elastische Deformationen auf, welche ohne Materialschädigung und ohne Gefahr eines Bruches erfolgen können. Das Befestigungselement weist somit eine ausreichende Elastizität auf, um beispielsweise thermische Belastungen aufzunehmen, es weist jedoch eine ausreichende Festigkeit auf, um Schwingungsbelastungen aufzufangen. Derartige Schwingungsbelastungen wirken erfindungsgemäß insbesondere auf die beiden Streben, welche als lange und dünne Bauteile ausgebildet sind und eine ausreichende Festigkeit haben. Durch die bei dem Befestigungselement vorgesehene lokale Festigkeit, welche im Hinblick auf thermische Belastungen sehr klein sein kann, kann eine elastische Verformung ohne Beschädigung des Befestigungselements erfolgen.

Die erfindungsgemäßen Befestigungselemente ersetzen somit die aus dem Stand der Technik bekannten sphärischen Elemente. Bei den vorbekannten Konstruktionen müssen die Biegemomente oder Zugkräfte jeweils durch die sphärischen Verbindungselemente aufgenommen werden. Dies ist bei der erfindungsgemäßen Lösung nicht der Fall, da die Befestigungselemente selbst deformierbar sind und somit die aus dem Stand der Technik bekannten sphärischen Elemente ersetzen. Die auftretenden Biegemomente haben somit auf die erfindungsgemäßen Befestigungselemente keinen negativen Einfluss.

Hinsichtlich der Enteisungsvorrichtung schafft die Erfindung somit die Möglichkeit, das kreisringförmige Rohrelement (picollo tube) so zu lagern, dass dieses hinsichtlich seiner thermischen Ausdehnungen und Kontraktionen nicht durch die Befestigungselemente behindert wird. Es treten somit keine Belastungen auf, welche zu einem Bruch, weder der Befestigungselemente noch des Rohrelements, führen könnten. Auch hinsichtlich der auftretenden Vibrationen ist die erfindungsgemäße Ausgestaltung des Befestigungselements in hohem Maße betriebssicher. Es ergibt sich somit eine direkte Kraftübertragung von dem ringförmigen Rohrelement auf den Bereich der Triebwerksverkleidung, welche das Rohrelement lagert. Es befinden sich keine Teile miteinander in Kontakt, die eine Relativbewegung zueinander so ausführen, dass hierdurch ein Verschleiß auftreten könnte. Das erfindungsgemäße Befestigungselement ist vielmehr verschleißfrei, es erfordert keine Wartung und weist eine hohe Lebensdauer auf. Im Vergleich zu aus dem Stand der Technik vorbekannten Konstruktionen ergibt sich eine erhebliche Gewichtsreduzierung von bis zu 2/3 des Gewichts vorbekannter Konstruktionen. Weiterhin ist die erfindungsgemäße Lösung kostengünstig und einfach herstellbar. Durch die kostengünstige Herstellungsmöglichkeit der erfindungsgemäßen Lagerungselemente oder Befestigungselemente ergeben sich für das gesamte Triebwerk insgesamt niedrigere Kosten. Ein weiterer Vorteil liegt darin, dass während der Lebensdauer des Triebwerkes praktisch keine Wartungsarbeiten durchgeführt werden müssen. Auch hierdurch können die Gesamtkosten erheblich gesenkt werden.

Das erfindungsgemäße Befestigungselement erlaubt somit eine präzise konzentrische und axiale Positionierung zweier Bauelemente unter gleichzeitiger Gewährleistung einer begrenzten, vorgegebenen relativen Bewegbarkeit in mehreren Bewegungsrichtungen.

Erfindungsgemäß wird somit ein einziges, einstückiges Befestigungselement geschaffen, welches kostengünstig herstellbar ist und bei seiner Montage nur einen minimalen Aufwand erfordert.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine perspektivische Ansicht, teils im Schnitt, des Anströmbereichs/der Ringlippe einer Triebwerksverkleidung mit ringförmigem Rohrelement und erfindungsgemäßen Befestigungselementen,
- Fig. 3: eine Ansicht, analog Fig. 2, rückseitig gegen die Strömungsrichtung,
- Fig. 4: eine vergrößerte perspektivische Teilansicht eines Ausführungsbeispiels des erfindungsgemäßen Befestigungselements sowie des zugehörigen Rohrelements, und
- Fig. 5: eine vereinfachte Seitenansicht der Anordnung gemäß Fig. 4.

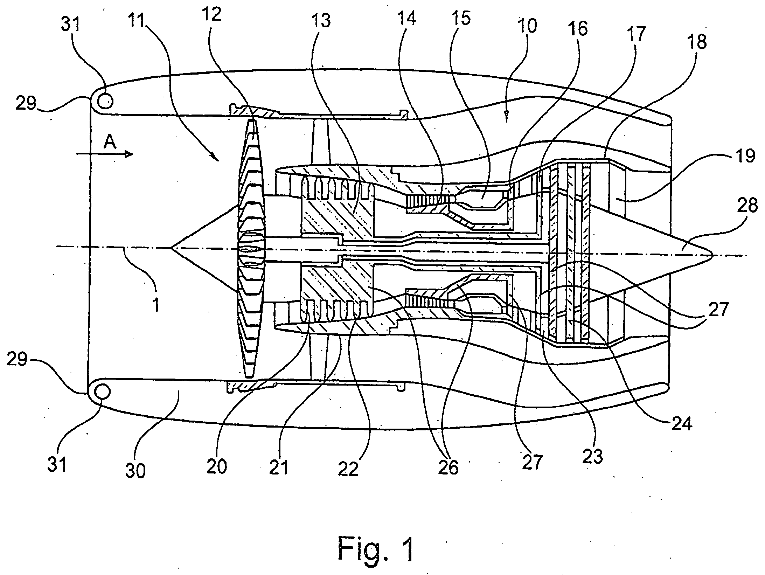

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Das Bezugszeichen 28 bezeichnet einen Auslasskonus.

Weiterhin weist das Gasturbinentriebwerk einen Anströmbereich 29 (Ringlippe) auf, welcher Teil einer Triebwerksverkleidung (nacelle) 30 ist.

Wie aus dem Stand der Technik bekannt, ist innerhalb der Triebwerksverkleidung 30, welche doppelwandig ausgebildet ist, benachbart zu dem Anströmbereich 29, ein ringförmiges Rohrelement 31 angeordnet, welches mit Austrittsöffnungen versehen ist, um zugeführte Heißluft insbesondere an die Innenwandung des Anströmbereichs 29 zu leiten, um dieses zu enteisen.

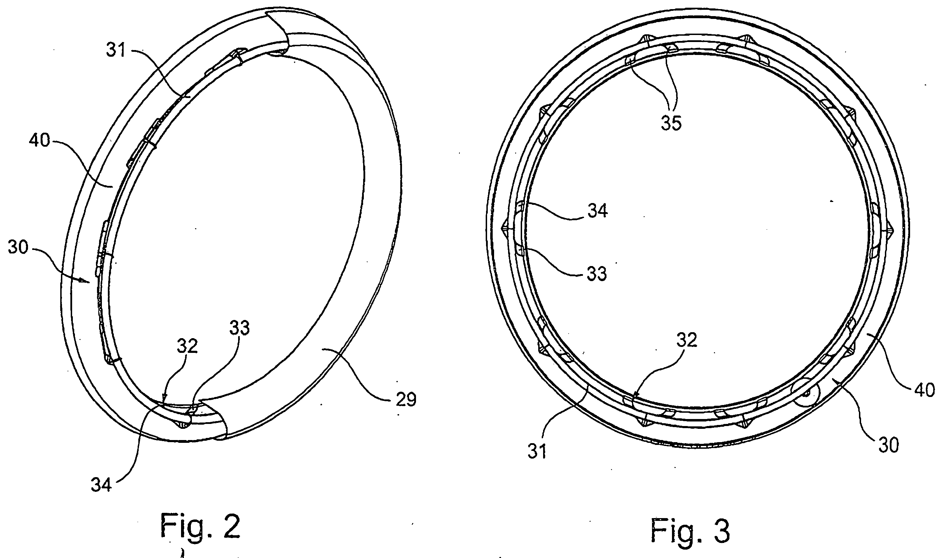

Die Fig. 2 bis 4 zeigen zum einen das erfindungsgemäße Befestigungselement und zum anderen dessen Zuordnung und Verwendung zu einem ringförmigen Rohrelement (picollo tube) zur Enteisung des Anströmbereichs 29.

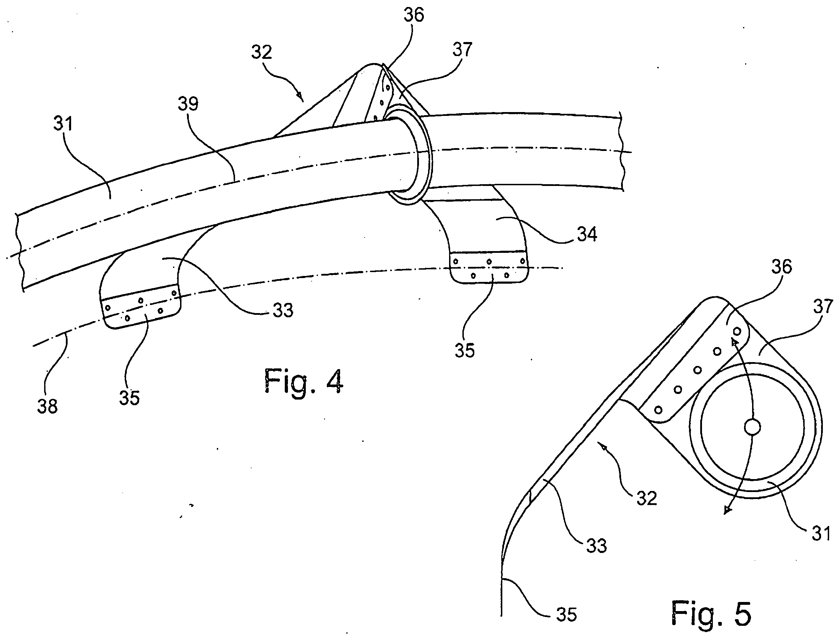

Im Einzelnen zeigt die Fig. 4, dass das Befestigungselement 32 zwei Streben 33 und 34 aufweist, welche als Blechbiegeteile ausgebildet sind. Somit sind die Streben 33 und 34, bezogen auf ihre Dicke und ihre Breite, relativ lang, so dass sie sich leicht elastisch verformen können. Erste Endbereiche 35 sind mit der Tragstruktur der Triebwerksverkleidung 30 verbunden, beispielsweise einer Wandung 40. Die Verbindung erfolgt beispielsweise mittels Nieten oder Schrauben. Die beiden Streben 33 und 34 sind in einem Winkel zueinander angeordnet, die zueinander beabstandeten ersten Endbereiche 35 sind auf einer Kreisbahn 38 angeordnet, welche konzentrisch zu einer Mittelachse 39 des Rohrelements 31 angeordnet ist.

Wie die Fig. 2 und 3 zeigen, sind am Umfang des Rohrelements 31 mehrere erfindungsgemäße Befestigungselemente 32 vorgesehen.

Die jeweiligen zweiten Endbereiche 36 der Streben 33 und 34 sind abgewinkelt und miteinander verbunden, beispielsweise ebenfalls über Nieten oder Schrauben. Die zweiten Endbereiche 36 lagern ein Trägerelement 37, welches in einer Ebene senkrecht zur Mittelachse 39 des Rohrelements 31 angeordnet ist. Die Streben 33 und 34 bilden somit mit ihren zweiten Endbereichen 36 und dem Trägerelement 37 eine dreidimensionale Fachwerkstruktur. Die zweiten Endbereiche 36 sind, wie aus den Fig. 4 und 5 ersichtlich ist, zu den Mittelteilen der beiden Streben 33 und 34 umgebogen. Auch der Übergang zwischen den jeweiligen ersten Endbereichen 35 und den Streben 33 bzw. 34 ist mit einem Radius versehen. Es ergibt sich somit eine Gesamtkonstruktion, welche bei hoher Festigkeit elastische Verformungen zulässt.

Die Fig. 5 zeigt mit den beiden Pfeilen elastische Verformungen des Rohrelements 31 aufgrund thermischer Belastungen (Ausdehnung bzw. Kontraktion). Hierbei können sich die Streben 33 und 34 elastisch verformen, so dass keine internen Materialbelastungen auftreten, die zu einem Bruch führen könnten. Schwingungen oder Bewegungen längs der Mittelachse 39 können im Bereich der zweiten Endbereiche 36 aufgefangen werden, da diese zusammen mit dem Trägerelement 37 elastisch verformbar sind und die entstehenden Belastungen aufnehmen.

Das erfindungsgemäße Befestigungselement zeichnet sich somit durch einen einfachen Aufbau und eine einfache Konstruktionsweise aus, welche durch geeignete Dimensionierung und Materialauswahl exakt vorbestimmbar ist. Der Verschleiß ist, im Vergleich zum Stand der Technik minimal, so dass sich eine weitaus höhere Lebensdauer ergibt. Durch den geringeren Montageaufwand und durch die geringe Anzahl der Teile ergibt sich eine erhebliche Kosteneinsparung. Zusätzlich ergibt sich ein Vorteil hinsichtlich der Gewichtsreduzierung.

### Bezugszeichenliste:

- 1: Triebwerksachse
- 10: Gasturbinentriebwerk
- 11: Lufteinlass / Einströmbereich
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Anströmbereich/ Ringlippe
- 30: Triebwerksverkleidung (nacelle)
- 31: Rohrelement
- 32: Befestigungselement
- 33: Strebe
- 34: Strebe
- 35: Erster Endbereich
- 36: Zweiter Endbereich
- 37: Trägerelement
- 38: Kreisbahn
- 39: Mittelachse
- 40: Wandung

## Patentansprüche

1. Enteisungsvorrichtung eines Fluggasturbinentriebwerks mit einer zumindest einen Einströmbereich (11) umgebenden Triebswerksverkleidung (30), welche doppelwandig ausgebildet ist und zumindest ein sich in Umfangsrichtung kreisringförmig erstreckendes, Ausströmöffnungen aufweisendes Rohrelement (31) zur Zuführung von Heißluft zur Enteisung eines Anströmbereichs (29) umfasst, wobei das Rohrelement (31) in Umfangsrichtung mittels mehrerer eine vorgegebene Relativbewegungsmöglichkeit schaffender Befestigungselemente (32) an der Triebwerksverkleidung (30) gelagert ist, wobei jedes Befestigungselement (32) zwei Streben (33, 34) umfasst, die in einem Winkel zueinander angeordnet sind, wobei zwei zueinander beabstandete erste Endbereiche (35) an der Triebwerksverkleidung (30) befestigt sind und die beiden anderen zweiten Endbereiche (36) miteinander verbunden und an dem Rohrelement (31) befestigt sind, **dadurch gekennzeichnet, dass** die zweiten Endbereiche (36) das Rohrelement (31) mittels eines mit den zweiten Endbereichen (36) und dem Rohrelement (31) verbundenen Trägerelements (37) verbinden.

2. Enteisungsvorrichtung nach Anspruch 1, **dadurch gekennzeichnet, dass** die Streben (33, 34) biegeelastisch und/oder in Form flacher Blechstreifen ausgebildet sind.

3. Enteisungsvorrichtung nach einem der Ansprüche 1 oder 2, **dadurch gekennzeichnet, dass** die ersten Endbereiche (35) zueinander beabstandet auf einer Kreisbahn (38) befestigt sind, welche konzentrisch zu einer Mittelachse (39) des Rohrelements (31) angeordnet sind.

4. Enteisungsvorrichtung nach einem der Ansprüche 1 bis 3, **dadurch gekennzeichnet, dass** das Rohrelement (31) fest oder elastisch mit dem Trägerelement (37) verbunden ist.

5. Enteisungsvorrichtung nach einem der Ansprüche 1 bis 4, **dadurch gekennzeichnet, dass** das Trägerelement (37) in einer Ebene senkrecht zur Mittelachse (39) des Rohrelements (31) angeordnet ist.

## Claims

1. De-icing device of an aircraft gas-turbine engine with an engine cowling (30) enclosing at least one inflow region (11), said engine cowling (30) having a double-walled design and including at least one tube element (31) extending circularly in the circumferential direction and being provided with outlet openings for supplying hot air in order to de-ice an inflow region (29), with the tube element (31) in the circumferential direction being mounted on the engine cowling (30) by several fastening elements (32) enabling a predetermined relative movability, with each fastening element (32) including two struts (33, 34) arranged at an angle to one another, where two first end areas (35), spacedly arranged from one another, are fastened to the engine cowling (30), and the two other second end areas (36) are connected to one another and fastened to the tube element (31), **characterized in that** the second end areas (36) connect the tube element (31) by means of a carrier element (37) attached to the second end areas (36) and to the tube element (31).

2. De-icing device in accordance with Claim 1, **characterized in that** the struts (33, 34) are elastically bendable and/ or are designed in the form of flat sheet-metal strips.

3. De-icing device in accordance with one of the Claims 1 or 2, **characterized in that** the first end areas (35), spacedly arranged from one another, are provided on a circular path (38) which is arranged concentrically to a center axis (39) of the tube element (31).

4. De-icing device in accordance with one of the Claims 1 to 3, **characterized in that** the tube element (31) is fixedly or elastically connected to the carrier element (37).

5. De-icing device in accordance with one of the Claims 1 to 4, **characterized in that** the carrier element (37) is arranged in a plane vertical to the center axis (39) of the tube element (31).

## Revendications

1. Dispositif de dégivrage d'un moteur d'avion à turbine à gaz avec un carénage de moteur (30) à double paroi qui entoure au moins une zone d'afflux (11) et comprend au moins un élément tubulaire (31) s'étendant sous forme d'anneau circulaire dans le sens circonférentiel et présentant des orifices de sortie destinés à amener de l'air chaud afin de dégivrer une zone d'afflux (29), sachant que dans le sens circonférentiel, l'élément tubulaire (31) est logé au carénage de moteur (30) au moyen de plusieurs éléments de fixation (32) permettant une mobilité relative prédéfinie, sachant que chaque élément de fixation (32) comprend deux entretoises (33, 34) disposées en faisant un angle entre elles, que deux premières extrémités (35) distantes l'une de l'autre sont fixées au carénage de moteur (30) et les deux secondes extrémités (36) sont reliées entre elles et fixées à l'élément tubulaire (31), **caractérisé en ce que** les secondes extrémités (36) relient l'élément tubulaire (31) au moyen d'un élément porteur (37) fixé aux secondes extrémités (36) et à l'élément tubulaire (31).

2. Dispositif de dégivrage selon la revendication n° 1, **caractérisé en ce que** les entretoises (33, 34) sont conçues élastiques en flexion et/ ou sous forme de rubans de tôle plats.

3. Dispositif de dégivrage selon une des revendications n° 1 ou n° 2, **caractérisé en ce que** les premières extrémités (35) sont fixées distantes l'une de l'autre sur une piste circulaire (38) disposée de manière concentrique par rapport à un axe médian (39) de l'élément tubulaire (31).

4. Dispositif de dégivrage selon une des revendications n° 1 à n° 3, **caractérisé en ce que** l'élément tubulaire (31) est relié à l'élément porteur (37) de manière rigide ou élastique.

5. Dispositif de dégivrage selon une des revendications n° 1 à n° 4, **caractérisé en ce que** l'élément porteur (37) est disposé dans un plan perpendiculaire à l'axe médian (39) de l'élément tubulaire (31).
